# EUROPEAN PATENT SPECIFICATION

(11) **EP 2 792 639 B1**
(45) Date of publication and mention of the grant of the patent: **20.03.2019**
(21) Application number: 12857394.6
(22) Date of filing: 07.12.2012
(51) Int. Cl.: C01B 32/05, C01B 32/194, C01B 32/182, B82Y 30/00, B82Y 40/00, C25B 11/03, C25B 11/12, C25B 1/00, C25B 1/46, H01M 4/96

(54) **CARBON-BASED MATERIAL, ELECTRODE CATALYST, OXYGEN REDUCTION ELECTRODE CATALYST, GAS DIFFUSION ELECTRODE, AQUEOUS SOLUTION ELECTROLYSIS DEVICE, AND METHOD OF PREPARING CARBON-BASED MATERIAL**
MATERIAL AUF KOHLENSTOFFBASIS, ELEKTRODENKATALYSATOR, SAUERSTOFFREDUKTIONSELEKTRODENKATALYSATOR, GASDIFFUSIONSELEKTRODE, ELEKTROLYTISCHE VORRICHTUNG MIT EINER WÄSSRIGEN LÖSUNG UND HERSTELLUNGSVERFAHREN FÜR DAS MATERIAL AUF KOHLENSTOFFBASIS
MATÉRIAU CARBONÉ, CATALYSEUR D'ÉLECTRODE, CATALYSEUR D'ÉLECTRODE D'OXYDORÉDUCTION, ÉLECTRODE DE DIFFUSION GAZEUSE, DISPOSITIF ÉLECTROLYTIQUE POUR SOLUTION AQUEUSE, ET PROCÉDÉ DE PRODUCTION DE MATÉRIAU CARBONÉ

(30) Priority: 12.12.2011 JP 2011271728; 15.12.2011 JP 2011274379; 27.03.2012 JP 2012072265
(43) Date of publication of application: 22.10.2014
(73) Proprietor: Panasonic Corporation, Kadoma-shi, Osaka 571-8501 (JP)
(72) Inventor: NAKANISHI, Shuji, Osaka 540-6207 (JP); KAMAI, Ryo, Osaka 540-6207 (JP); SUZUKI, Yuya, Osaka 540-6207 (JP); HASHIMOTO, Kazuhito, Tokyo 113-8656 (JP); KAMIYA, Kazuhide, Tokyo 113-8656 (JP)
(74) Representative: Müller-Boré & Partner Patentanwälte PartG mbB
(86) International application number: PCT/JP2012/081751
(87) International publication number: WO 2013/089026

(56) References cited:
- WO-A1-2009/148115
- WO-A1-2010/064556
- WO-A1-2011/016837
- JP-A- 2006 272 491
- KR-A- 20110 124 458
- R. IMRAN JAFRI ET AL: "Nitrogen doped graphene nanoplatelets as catalyst support for oxygen reduction reaction in proton exchange membrane fuel cell", JOURNAL OF MATERIALS CHEMISTRY, vol. 20, no. 34, 1 January 2010 (2010-01-01), page 7114, XP055135636, ISSN: 0959-9428, DOI: 10.1039/c0jm00467g
- CHI-WEN TSAI ET AL: "Nitrogen-doped graphene nanosheet-supported non-precious iron nitride nanoparticles as an efficient electrocatalyst for oxygen reduction", RSC ADVANCES, vol. 1, no. 7, 7 October 2011 (2011-10-07) , page 1349, XP055197520, ISSN: 2046-2069, DOI: 10.1039/c1ra00373a
- LE-SHENG ZHANG ET AL: "Identification of the nitrogen species on N-doped graphene layers and Pt/NG composite catalyst for direct methanol fuel cell", PHYSICAL CHEMISTRY CHEMICAL PHYSICS, vol. 12, no. 38, 1 October 2010 (2010-10-01), pages 12055-12059, XP055027968, ISSN: 1463-9076, DOI: 10.1039/c0cp00789g
- CHARRETEUR ET AL: "Fe/N/C non-precious catalysts for PEM fuel cells: Influence of the structural parameters of pristine commercial carbon blacks on their activity for oxygen reduction", ELECTROCHIMICA ACTA, ELSEVIER SCIENCE PUBLISHERS, BARKING, GB, vol. 53, no. 6, 21 December 2007 (2007-12-21), pages 2925-2938, XP022411231, ISSN: 0013-4686, DOI: 10.1016/J.ELECTACTA.2007.11.002
- KEJUN ZHANG ET AL: "A hybrid material of vanadium nitride and nitrogen-doped graphene for lithium storage", JOURNAL OF MATERIALS CHEMISTRY, vol. 21, no. 32, 11 July 2011 (2011-07-11) , page 11916, XP055200108, ISSN: 0959-9428, DOI: 10.1039/c1jm11710f
- GANG WU: "Nitrogen-doped magnetic onion-like carbon as support for Pt particles in a hybrid cathode catalyst for fuel cells", JOURNAL OF MATERIALS CHEMISTRY, ROYAL SOCIETY OF CHEMISTRY, GB, vol. 20, 1 January 2010 (2010-01-01), pages 3059-3068, XP009159086, ISSN: 0959-9428, DOI: 10.1039/B924010A
- IMRAN JAFRI, R. ET AL.: 'Nitrogen doped graphene nanoplatelets as catalyst support for oxygen reduction reaction in proton exchange membrane fuel cell' J. MATER. CHEM. vol. 20, no. 34, 04 September 2010, pages 7114 - 7117, XP055135636
- WEN, Z. ET AL.: 'Metal nitride/graphene nanohybrids: General synthesis and multifunctional titanium nitride/graphene electrocatalyst' ADV. MATER. vol. 23, no. 45, 01 December 2011, pages 5445 - 5450, XP055083484
- HSIEH, C.-T. ET AL.: 'High reversibility of Li intercalation and de-intercalation in MnO- attached graphene anodes for Li-ion batteries' ELECTROCHIM. ACTA vol. 56, no. 24, 01 October 2011, pages 8861 - 8867, XP028289280
- Shanmu Dong ET AL: "Molybdenum nitride based hybrid cathode for rechargeable lithium-O2 batteries", Chemical Communications, vol. 47, no. 40, 19 September 2011 (2011-09-19), page 11291, XP055200093, ISSN: 1359-7345, DOI: 10.1039/c1cc14427h

## Description

### Technical Field

The present invention relates to: carbon-based materials suitable for use as catalysts; electrode catalysts and oxygen reduction electrode catalysts each including the carbon-based material; gas diffusion electrodes which include at least one of the electrode catalyst and the oxygen reduction electrode catalyst; and methods of preparing the carbon-based material.

### Background Art

The following oxygen reduction reaction is a cathode reaction in a H₂/O₂ fuel cell, brine electrolysis, and the like, and plays an important role in an electrochemical energy conversion device and the like.

O₂ + 4H⁺ + 4e⁻ → 2H₂O

Usually, platinum is used as a catalyst widely in various devices to make the oxygen reduction reaction proceed.

However, platinum is rare and expensive, and the cost thereof is unstable. Therefore, using platinum poses problems in view of saving natural resources, ensuring availability, lowering the cost, and the like.

In the past, a catalyst formed of a carbon-based material doped with metal and nitrogen has been developed and has attracted attention as a promising catalyst alternative to platinum. For example, non Patent Literature 1 discloses that a carbon-based crystal is prepared by heating a mixture of iron phthalocyanine and a phenolic resin at a heating temperature ranging from 700°C to 900°C for a heating time ranging from two to three hours under inert atmosphere, and that the carbon-based crystal functions as a catalyst promoting oxygen reduction. Besides, non Patent Literature 1 discloses that in a catalyst formation process, iron has also a catalytic function of promoting crystallization of the carbon-based catalyst.

Non Patent Literature 2 discloses that a carbon-based crystal containing iron and nitrogen is produced by preparing a mixture of graphene oxide, iron chloride, and graphitic carbon nitride (g-C₃H₄), chemically-reducing the graphene oxide of the mixture to graphene using a reducing agent, and then heating the resultant mixture at a heating temperature of 800°C for a heating time of two hours under argon atmosphere. Besides, non Patent Literature 2 discloses that the carbon-based crystal functions as a catalyst for promoting oxygen reduction.

In order that such a catalyst shows sufficient catalytic activity, it is required to sufficiently increase the number of reaction active centers by sufficiently widening an area per sheet of graphene sheets, or to dope one graphene sheet with more amounts of iron and nitrogen, the graphene sheets composing of the carbon-based crystal. To achieve this, in the past, attempted has been methods of increasing the heating temperature under inert atmosphere for preparing the carbon-based crystal and of increasing the heating time.

### Citation List

### Non Patent Literature

Non Patent Literature 1: Carbon, Vol. 48, No. 9. (02 August 2010), p. 2613-2624
Non Patent Literature 2: Chem. Mater 2011. 23, 3421-3428

### Summary of Invention

### Technical Problem

However, increasing the heating temperature and increasing the heating time under inert atmosphere for preparing the carbon-based crystal may cause a decrease in catalytic performance, unfortunately.

The present invention has been made in view of the above insufficiencies, and the object thereof is to provide: a carbon-based material with high catalytic activity; an electrode catalyst and an oxygen reduction electrode catalyst each including the carbon-based material; a gas diffusion electrode including at least one of the catalysts; and a method of preparing a carbon-based material.

### Solution to Problem

According to the present invention, there is provided a carbon-based material comprising graphene doped with metal atoms and at least one type of non-metal atoms selected from a group consisting of nitrogen atoms, boron atoms, sulfur atoms, and phosphorus atoms, characterized in that a diffraction pattern obtained by X-ray diffraction measurement of the carbon-based material by use of CuKα radiation shows that a proportion of the highest of intensities of peaks derived from an inactive metal compound and a metal crystal to an intensity of a (002) peak at around 26° of 2θ is 0.1 or less, wherein the inactive metal compound is a compound composed of a metal atom which is not doped in graphene in the carbon-based material, and wherein the graphene is composed of a graphene sheet or formed of a material including two or more graphene sheets.

According to the present invention, there is provided a method of preparing a carbon-based material, including steps of: preparing a mixture of graphene oxide, a metal compound, and a non-metal containing compound which contains at least one type of non-metal selected from a group consisting of nitrogen, boron, sulfur, and phosphorus; and reducing the graphene oxide of the mixture to graphene; and doping the graphene with a metal atom derived from the metal compound and a non-metal atom derived from the non-metal containing compound, the non-metal containing compound having a molecular weight of 800 or less.

### Advantageous Effects of Invention

According to the present invention, obtained can be a carbon-based material with excellent performance as a catalyst, in particular, as a catalyst for promoting an oxygen reduction reaction.

### Brief Description of Drawings

FIG. 1 is a schematic view showing an aqueous solution electrolysis device in accordance with an example of an embodiment of the present invention;
FIG. 2 is a diagram illustrating a flow of treatment for ballast water using the aqueous solution electrolysis device;
FIG. 3 is a graph showing Raman spectra of graphite, graphene oxide, and carbon-based materials obtained in Example 2, Comparative Example 1, and Comparative Example 2;
FIG. 4 is a graph showing C1s peaks in the XPS spectra of the carbon-based material obtained in Example 2 and the graphene oxide;
FIG. 5 is a graph showing N1s peaks in the XPS spectrum of the carbon-based material obtained in Comparative Example 1;
FIG. 6 is a graph showing N1s peaks in the XPS spectrum of the carbon-based material obtained in Example 2;
FIG. 7 is a graph showing Fe2p peaks in the XPS spectra of the carbon-based materials obtained in Comparative Example 2 and Example 2;
FIG. 8 is a graph showing diffraction patterns obtained by X-ray diffraction measurements of the carbon-based materials obtained in Example 2 and Referential Example 2;
FIG. 9A is a graph showing a diffraction pattern obtained by X-ray diffraction measurement of graphite;
FIG. 9B is a graph showing a vertically extended view of FIG. 9A;
FIG. 10 is a graph showing a diffraction pattern obtained by X-ray diffraction measurement of graphene oxide;
FIG. 11 is a graph showing a diffraction pattern obtained by X-ray diffraction measurement of the carbon-based material obtained in Example 2;
FIG. 12 is a graph showing a diffraction pattern obtained by X-ray diffraction measurement of a carbon-based material obtained in Referential Example 1;
FIG. 13 is a graph showing superimposed diffraction patterns obtained by X-ray diffraction measurements of graphite, graphene, and the carbon-based materials obtained in Example 2 and Referential Example 1;
FIG. 14 is an electron micrograph of the carbon-based material obtained in Example 2; and
FIG. 15 is a graph showing rotating disk electrode voltammograms of the carbon-based materials obtained in Examples 1 to 3, Comparative Example 1, and Referential Example 1.

### Description of Embodiments

The carbon-based material according to the first aspect of the present invention includes graphene doped with metal atoms and at least one type of non-metal atoms selected from a group consisting of nitrogen atoms, boron atoms, sulfur atoms, and phosphorus atoms. Besides, a diffraction pattern obtained by X-ray diffraction measurement of the carbon-based material by use of CuKα radiation shows that a proportion of the highest of intensities of peaks derived from an inactive metal compound and a metal crystal to an intensity of a (002) peak is 0.1 or less.

According to the second aspect of the present invention, the non-metal atom is a nitrogen atom.

In other words, the carbon-based material according to the second aspect of the present invention includes graphene doped with metal atoms and nitrogen atoms. Besides, the diffraction pattern obtained by X-ray diffraction measurement of the carbon-based material by use of CuKα radiation shows that the proportion of the highest of intensities of peaks derived from the inactive metal compound and the metal crystal to the intensity of the (002) peak is 0.1 or less.

According to the third aspect of the present invention referring to the first or second aspect, a proportion of the intensity of the (002) peak of the diffraction pattern obtained by X-ray diffraction measurement of the carbon-based material by use of CuKα radiation to an intensity of a (002) peak of a diffraction pattern obtained by X-ray diffraction measurement of graphite by use of CuKα radiation is 0.002 or less.

According to the fourth aspect of the present invention referring to any one of the first to third aspects, a percentage of the metal atoms to carbon atoms of the carbon-based material is 0.5 mass% or more but 10 mass% or less. The percentage is determined by XPS.

According to the fifth aspect of the present invention referring to any one of the first to fourth aspects, a percentage of the non-metal atoms to carbon atoms of the carbon-based material is 1 mass% or more. The percentage is determined by XPS.

According to the sixth aspect of the present invention referring to any one of the first to fifth aspects, the metal atoms include an iron atom.

The electrode catalyst according to the seventh aspect of the present invention includes the carbon-based material according to any one of the first to sixth aspects.

The oxygen reduction electrode catalyst according to the eighth aspect of the present invention includes the carbon-based material according to any one of the first to sixth aspects.

The gas diffusion electrode according to the ninth aspect of the present invention includes the catalyst according to the seventh or eighth aspect.

The aqueous solution electrolysis device according to the tenth aspect of the present invention includes: a vessel to receive an aqueous alkali halide solution; a first electrode and a second electrode to electrolyse an electrolyte liquid to be stored in the vessel; a power source to apply a voltage between the first electrode and the second electrode so that the first electrode functions as a cathode and the second electrode functions as an anode; and a cation exchange membrane between the first electrode and the second electrode in the vessel. The first electrode is the gas diffusion electrode according to the ninth aspect.

The method of preparing a carbon-based material according to the eleventh aspect of the present invention, includes steps of: preparing a mixture of graphene oxide, a metal compound, and a non-metal containing compound which contains at least one type of non-metal selected from a group consisting of nitrogen, boron, sulfur, and phosphorus; and reducing the graphene oxide of the mixture to graphene; and doping the graphene with a metal atom[s] derived from the metal compound and a non-metal atom[s] derived from the non-metal containing compound, the non-metal containing compound having a molecular weight of 800 or less.

In the method of preparing a carbon-based material according to the twelfth aspect of the present invention referring to the eleventh aspect, the steps of reducing the graphene oxide and doping the graphene with the metal atom[s] and the non-metal atom[s] are conducted by heating the mixture.

In the method of preparing a carbon-based material according to the thirteenth aspect of the present invention referring to the twelfth aspect, the mixture is heated at a heating temperature of 700°C or more but 1000°C or less for a heating time of 10 seconds or more but less than 10 minutes.

In the method of preparing a carbon-based material according to the fourteenth aspect of the present invention referring to any one of the eleventh to thirteenth aspects, the non-metal containing compound includes at least one selected from a group consisting of pentaethylenehexamine, tetraethylenepentamine, triethylenetetramine, and ethylenediamine.

According to the fifteenth aspect of the present invention referring to the eleventh aspect, the non-metal atom[s] includes a nitrogen atom.

In other words, the method of preparing a carbon-based material according to the fifteenth aspect of the present invention includes steps of: preparing a mixture of graphene oxide, a metal compound, and a nitrogen-containing compound; reducing the graphene oxide of the mixture to graphene; and doping the graphene with a metal atom[s] derived from the metal compound and a nitrogen atom[s] derived from the nitrogen-containing compound. The nitrogen-containing compound has a molecular weight of 800 or less.

In the method of preparing a carbon-based material in accordance with the present invention, the steps of reducing the graphene oxide and doping the graphene with the metal atom[s] and the nitrogen atom[s] are preferably conducted by heating the mixture. In addition, the mixture is preferably heated at a heating temperature of 700°C or more but 1000°C or less for a heating time of 10 seconds or more but less than 10 minutes.

In other words, in the method of preparing a carbon-based material according to the sixteenth aspect of the present invention referring to the fifteenth aspect, the steps of reducing the graphene oxide and doping the graphene with the metal atom[s] and the nitrogen atom[s] are conducted by heating the mixture. Besides, in the method of preparing a carbon-based material according to the seventeenth aspect of the present invention referring to the sixteenth aspect, the mixture is heated at a heating temperature of 700°C or more but 1000°C or less for a heating time of 10 seconds or more but less than 10 minutes.

In the method of preparing a carbon-based material according to the seventeenth aspect of the present invention referring to the fifteenth or sixteenth aspect, the nitrogen-containing compound includes at least one selected from a group consisting of pentaethylenehexamine, tetraethylenepentamine, triethylenetetramine, and ethylenediamine.

Specific embodiments of the carbon-based material and the method of preparing a carbon-based material each in accordance with the present invention will be described below.

First, the embodiment of the carbon-based material will be described.

As described above, the carbon-based material is composed of graphene doped with a metal atom[s] and at least one type of non-metal atoms selected from a group consisting of nitrogen atoms, boron atoms, sulfur atoms, and phosphorus atoms. In the present embodiment, the non-metal atom is a nitrogen atom. The carbon-based material of the present embodiment is prepared by doping graphene with metal atoms and nitrogen atoms. That is, the carbon-based material of the present embodiment is composed of graphene doped with metal atoms and nitrogen atoms.

In this regard, the graphene is composed of a graphene sheet. The graphene sheet has a structure of sp²-bonded carbon atoms. The graphene is preferably formed of a material including two or more graphene sheets. In the material including two or more graphene sheets, the number of stacked graphene sheets is preferably 10 or less.

Besides, a diffraction pattern of the carbon-based material obtained by X-ray diffraction measurement using CuKα radiation shows that a proportion of the highest of intensities of peaks derived from an inactive metal compound and a metal crystal to an intensity of a (002) peak is 0.1 or less. In other words, proportions of the inactive metal compound and the metal crystal in the carbon-based material are remarkably small. The (002) peak is present at around 26° of 2θ. The θ represents an incident angle of X-rays to a sample in X-ray diffraction measurement. In this regard, the inactive metal compound is a compound composed of a metal atom[s] which is not doped in graphene in the carbon-based material, and such a compound is, for example, metal carbide, metal nitride, or metal sulfide. The metal crystal is a crystal composed of metal atoms which is not doped in graphene. The proportions regarding the intensities of the peaks are preferably smaller. It is particularly preferable that the peaks derived from the inactive metal compound and the metal crystal be not observed.

Note that a base line of the diffraction pattern is obtained by Shirley method, and, in the diffraction pattern, the peak intensity is determined with reference to the base line.

The metal atom[s] with which the graphene is doped is not particularly limited, but preferably includes at least one type of atoms of metal selected from titanium (Ti), vanadium (V), chromium (Cr), manganese (Mn), iron (Fe), cobalt (Co), nickel (Ni), cupper (Cu), zirconium (Zr), niobium (Nb), molybdenum (Mo), ruthenium (Ru), rhodium (Rh), palladium (Pd), silver (Ag), hafnium (Hf), tantalum (Ta), tungsten (W), rhenium (Re), osmium (Os), iridium (Ir), platinum (Pt), and gold (Au). In this case, the carbon-based material shows excellent performance as a catalyst, and in particular as a catalyst for promoting the oxygen reduction reaction. The amount of the metal atom[s] added to the graphene may be arbitrarily selected so that the carbon-based material shows excellent catalytic performance. In particular, a percentage by mass of the metal atoms to carbon atoms of the carbon-based material preferably is 0.5 mass% or more but 10 mass% or less.

The amount of the nitrogen atom[s] added to the graphene may be also selected arbitrarily so that the carbon-based material shows excellent catalytic performance. In particular, a percentage by mass of the nitrogen atoms to the carbon atoms of the carbon-based material is preferably 1 mass% or more, and more preferably falls within a range of 2 mass% to 10 mass%.

In this regard, in a case of using at least one type of non-metal atoms selected from nitrogen atoms, boron atoms, sulfur atoms, and phosphorus atoms, an amount of the non-metal atoms added to graphene may be arbitrarily selected so that the carbon-based material shows excellent catalytic performance, but a percentage by mass of the non-metal atoms to the carbon atoms of the carbon-based material is preferably 1 mass% or more, and more preferably falls within a range of 2 mass% to 10 mass%.

Note that, in X-ray diffraction measurement of the carbon-based material of the present embodiment, it is preferable that a sample to be measured contain only the carbon-based material and do not contain a substance independently present from the carbon-based material such as a substance contaminated in the carbon-based material and a substance attached to the carbon-based material. Therefore, prior to the X-ray diffraction measurement of the carbon-based material, it is required to sufficiently decrease the amount of the substance which is independently present from the carbon-based material by, for example, washing with an aqueous acid solution.

The carbon-based material of the present embodiment shows excellent performance, in particular, as an oxygen reduction catalyst. This may be because the carbon-based material is composed of graphene and therefore has high electrical conductivity. Besides, this may be also because the metal atom[s] with which the graphene is doped can sufficiently show a function as a reaction center without being inhibited by the inactive metal compound and the metal crystal owing to markedly low proportions of the inactive metal compound and the metal crystal to the carbon-based material. In the past, a carbon-based crystal containing iron and nitrogen has not shown high catalytic activity sufficiently. This may be because the inactive metal compound and the metal crystal are produced unfortunately in the process of preparing the carbon-based material, and inhibit the catalytic activity. In contrast, the carbon-based material of the present embodiment has markedly low inactive metal compound content and metal crystal content, and therefore shows high catalytic activity.

It is preferable that the number of stacked graphene sheets in the carbon-based material is sufficiently small. In this case, the catalytic activity of the carbon-based material is more improved. This may be because a specific surface area increases with a decrease in the number of stacked graphene sheets. Besides, the carbon-based material preferably has a sufficiently great distance between the graphene sheets. Also in this case, the catalytic activity of the carbon-based material is more improved. This may be because the catalytic activity is also shown in a region between adjacent graphene sheets in the carbon-based material. The number of stacked graphene sheets and the distance between the graphene sheets in the carbon-based material are evaluated by the intensity of the (002) peak in the diffraction pattern. That is, as the number of stacked graphene sheets of the carbon-based material decreases, the intensity of the (002) peak decreases. Besides, as the distance between the graphene sheets of the carbon-based material increases, variation of the distance between the graphene sheets of the carbon-based material increases, and therefore the intensity of the (002) peak decreases. In brief, the intensity of the (002) peak is preferably small in the diffraction pattern obtained by X-ray diffraction measurement of the carbon-based material. Particularly, it is preferable that the proportion of the intensity of the (002) peak in the diffraction pattern obtained by the X-ray diffraction measurement of the carbon-based material by use of CuKα radiation to the intensity of the (002) peak in the diffraction pattern obtained by the X-ray diffraction measurement of graphite by use of CuKα radiation is 0.002 or less.

Next, the embodiment of the method of preparing the carbon-based material will be described below. The carbon-based material is prepared by mixing graphene oxide, the metal compound, and the non-metal containing compound and then reducing the graphene oxide. The non-metal containing compound contains at least one type of non-metal selected from a group consisting of nitrogen, boron, sulfur, and phosphorus. In the present embodiment, the non-metal containing compound is a nitrogen-containing compound. That is, in the present embodiment, the carbon-based material is prepared by mixing graphene oxide, the metal compound, and the nitrogen-containing compound and thereafter reducing the graphene oxide. In this case, prior to doping with the metal atoms and the nitrogen atoms, a fundamental structure of graphene is formed in the graphene oxide. Therefore, doping graphene with metal atoms does not require such heat treatment at high temperature for a long time to grow graphene sheets. Hence, suppressed are formations of the inactive metal compound and the metal crystal containing a metal atom which is not doped in graphene. Consequently, it is possible to prepare a carbon-based material having high electrical conductivity and remarkably small amounts of the inactive metal compound and the metal crystal. Also in the case of using the non-metal containing compound which contains at least one type of non-metal selected from nitrogen, boron, sulfur, and phosphorus, it is possible, similarly to the above case, to prepare a carbon-based material having high electrical conductivity and remarkably small amounts of the inactive metal compound and the metal crystal.

Besides, using graphene oxide as a starting material is likely to enable a decrease in the number of stacked graphene sheets. In other words, the carbon-based material in the form of a thin sheet is likely to be provided. Hence, the carbon-based material has a greater specific surface area, and therefore has higher catalytic activity.

Moreover, the nitrogen-containing compound which is used for preparing the carbon-based material has a molecular weight of 800 or less. Therefore, the graphene is easily doped with the nitrogen atom[s] derived from the nitrogen-containing compound. This may be because the molecular weight of the nitrogen-containing compound is small, therefore the nitrogen containing-compound is thermally decomposed in a short time, the nitrogen atom[s] produced in the thermal decomposition is easily inserted between the graphene sheets, and therefore the opportunity for binding of the nitrogen atom[s] with carbon present in the graphene sheet is increased.

Note that, also in a case where the non-metal containing compound containing at least one type of non-metal selected from nitrogen, boron, sulfur, and phosphorus, the molecular weight of the non-metal containing compound is 800 or less. Therefore, the graphene is easily doped with a non-metal atom[s] derived from the non-metal containing compound. This may be because the molecular weight of the non-metal containing compound is small, therefore the non-metal containing compound is thermally decomposed in a short time, the non-metal atom[s] produced in the thermally decomposition is easily inserted between the graphene sheets, and therefore the opportunity for binding of the non-metal atom[s] and carbon present in the graphene sheet is increased.

In contrast, in a case of using the nitrogen-containing compound having a greater molecular weight instead of the nitrogen-containing compound with the molecular weight of 800 or less as described in the present embodiment, the nitrogen-containing compound is less likely to be decomposed, and therefore the graphene is less likely to be doped with the nitrogen atom[s]. Accordingly, formations of the inactive metal compound and the like are facilitated. Besides, in this case, heat treatment at a high temperature for a long time is required to sufficiently dope graphene with the nitrogen atom[s]. Therefore, growth of the inactive metal compound and the metal crystal is promoted, and the distance between the graphene sheets is likely to decrease (namely, stacking the graphene sheets is facilitated), unfortunately. Therefore, the catalytic activity of the carbon-based material is less likely to be improved sufficiently.

In the present embodiment, it is preferable that thermal decompositions of the metal compound and the nitrogen-containing compound and reduction of the graphene oxide proceed in the mixture of graphene oxide, the metal compound, and the nitrogen-containing compound. It is particularly preferable that thermal decompositions of the metal compound and the nitrogen-containing compound proceed in parallel with reduction of the graphene oxide. In this case, doping of the graphene with the metal atom[s] and the nitrogen atom[s] is promoted. This may be because graphene oxide which has yet to be reduced is highly hydrophilic, and therefore the nitrogen-containing compound and the metal compound are more likely to enter a space between the layers of the sheet structure of the graphene oxide in the process of the reactions. That is, in the space between the layers of the sheet structure of the graphene oxide, the nitrogen-containing compound may be stabilized by hydrogen bonding with a hydrophilic functional group of the graphene oxide, and furthermore this nitrogen-containing compound may be more likely to coordinate to metal. Accordingly, concentrations of the nitrogen atom and the metal atom may increase locally, and therefore the graphene is more likely to be doped with the nitrogen atom[s] and the metal atom[s]. Note that this may be applicable to a case of using the non-metal containing compound which contains at least one type of non-metal selected from nitrogen, boron, sulfur, and phosphorus.

As described above, doping of graphene with the metal atoms and the nitrogen atoms is promoted, and therefore the inactive metal compound and the metal crystal are less likely to be generated in the process of preparing the carbon-based material. Accordingly, it is possible to prepare the carbon-based material having the remarkably low inactive metal compound content and metal crystal content.

Additionally, it is preferable that a step of heating the mixture of the graphene oxide, the metal compound, and the nitrogen-containing compound is performed to promote the thermal decomposition of the metal compound and the nitrogen-containing compound as well as the reduction of graphene. Besides, in this step of heating, the heating time is preferably short. As described above, in the present embodiment, doping of graphene with the metal atoms and the nitrogen atoms is promoted. Therefore, even when the heating time is short, a carbon-based material having a high metal atom content and a high nitrogen atom content can be easily obtained. Hence, the carbon-based material is efficiently prepared. In addition, when the heating time is short, catalytic activity of the carbon-based material is more improved. This is because formations of the inactive metal compound and the metal crystal are more suppressed. Note that when the heating time is long, the distance between the graphene sheets is likely to be short, namely, stacking of the graphene sheets is likely to be facilitated. In contrast, when the heating time is short, a decrease in the distance between graphene sheets is suppressed. Accordingly, the catalytic activity is more likely to be shown in the space between the adjacent graphene sheets in the carbon-based material. This is also a reason why the catalytic activity of the carbon-based material is improved. Furthermore, a heating rate in the step of heating is preferably great. With a great heating rate, the catalytic activity of the carbon-based material is more improved. This may be because the great heating rate causes an increase in the distance between the graphene sheets of the carbon-based material, and therefore the catalytic activity is more likely to occur in the space between the adjacent graphene sheets. The reason why the distance between the graphene sheets is likely to increase may be that gas such as CO₂ gas is generated between the graphene sheets by application of heat. When the heating rate is small, gas may be generated, however, the gas may be discharged from the graphene sheets without causing an increase in a pressure in the space between the graphene sheets. In contrast, when the heating rate is great, rapid generation of gas may cause an increase in the pressure in the space between the graphene sheets before discharge. Therefore, the distance between the graphene sheets may be increased. Note that, in a case of using the non-metal containing compound which contains at least one type of non-metal selected from nitrogen, boron, sulfur, and phosphorus, it is preferable that the heating time is short similarly to the above case.

The method of preparing a carbon-based material of the present embodiment will be described more specifically.

Graphene oxide is prepared by a known method. A representative example of the method of preparing graphene oxide may be the modified Hummers' method.

A preferable mode of the method of preparing graphene oxide will be described below. In the present mode, graphite and concentrated sulfuric acid are mixed to prepare a mixture. As requested, potassium nitrate may be further mixed therein. An amount of the concentrated sulfuric acid preferably falls within a range of 50 mL to 200 mL and more preferably falls within a range of 100 mL to 150 mL, based on 3 g of the graphite. Besides, an amount of the potassium nitrate is preferably 5 g or less and more preferably falls within a range of 3 g to 4 g, based on 3 g of the graphite.

Potassium permanganate is slowly added to the mixture in a reactor while the reactor is cooled preferably with an ice bath or the like. An addition amount of the potassium permanganate preferably falls within a range of 3 g to 18 g and more preferably falls within a range of 11g to 15 g, based on 3 g of the graphite. Subsequently, the resultant mixture is stirred so that the reaction proceeds. A reaction temperature at this step preferably falls within a range of 30°C to 55°C, and more preferably falls within a range of 30°C to 40°C. Besides, a reaction time at this step preferably falls within a range of 30 min to 90 min.

Subsequently, ion-exchanged water is added into the resultant mixture. An amount of the ion-exchanged water preferably falls within a range of 30 mL to 350 mL and more preferably falls within a range of 170 mL to 260 mL, based on 3 g of the graphite.

Then, the mixture is heated and stirred so that the reaction further proceeds at a reaction temperature for a reaction time. The reaction temperature preferably falls within a range of 80°C to 100°C. The reaction time is preferably longer than 20 min.

Subsequently, to finish the reaction, the temperature of the mixture is sufficiently lowered by, for example, adding ion-exchanged water to the mixture, and hydrogen peroxide is added to the resulting mixture. An amount of the ion-exchanged water is not particularly limited so long as the temperature of the mixture is sufficiently lowered. In addition, an amount of the hydrogen peroxide is not particularly limited, but 10 mL or more of 30% hydrogen peroxide is preferably used, and 15 mL or more is more preferably used, based on 3 g of the graphite, for example.

Subsequently, the resultant mixture is washed with hydrochloric acid and water, and then ions are removed from the mixture by dialysis. Moreover, ultrasonic is applied to thus-obtained mixture to separate graphene oxide. Consequently, graphene oxide is obtained.

Next, a method of doping graphene with metal and nitrogen will be described. Note that the following method may be also applicable to the case where the graphene is doped with the non-metal atom[s] using the non-metal containing compound which contains at least one type of non-metal selected from nitrogen, boron, sulfur, and phosphorus.

First, prepared is a mixture of the graphene oxide, the metal compound, and the nitrogen-containing compound. As described above, the nitrogen-containing compound used for preparing the carbon-based material has the molecular weight of 800 or less. The molecular weight of the nitrogen-containing compound more preferably falls within a range of 50 to 800, and much more preferably falls within a range of 100 to 300.

It is preferable that the nitrogen-containing compound allows formation of a complex of the nitrogen-containing compound and the metal atom[s] that is to be added to the graphene. In this case, the catalytic activity of the carbon-based material is further improved. The reason is assumed as follows. When used is the nitrogen-containing compound allowing formation of a complex of the nitrogen-containing compound and the metal atom to be added to the graphene, the metal atom and the nitrogen-containing compound are transiently formed into a complex in a step of thermally decomposing the metal containing compound and the nitrogen-containing compound and doping graphene with the resultant metal atom[s] and nitrogen atom[s] derived therefrom, and then the graphene may be more likely to be doped with the metal atom and the nitrogen atom of the complex. Therefore, it is assumed that a distance between the metal atom and the nitrogen atom added to the graphene is likely to be small. In this regard, the catalytic activity may occur at a position where the nitrogen atom and the metal atom of the carbon-based material are close to each other. Hence, the catalytic activity of the carbon-based material may be further improved by using the nitrogen-containing compound allowing the formation of a complex of the nitrogen-containing compound and the metal atom[s].

Particularly, when the nitrogen-containing compound includes at least one selected from pentaethylenehexamine, tetraethylenepentamine, triethylenetetramine, and ethylenediamine, the carbon-based material has particularly high catalytic activity.

For preparing of a mixture, for example, graphene oxide is sufficiently dried. Then, to the dried graphene oxide, added are a solution of the metal compound and a solvent solution (e.g., ethanol solution) of the nitrogen-containing compound which contains a lone pair such as pentaethylenehexamine, tetraethylenepentamine, triethylenetetramine, and ethylenediamine. The metal compound is not particularly limited so long as it contains metal with which graphene is to be doped. Examples of the metal compound include inorganic metal salts (e.g., chloride salts, nitrate salts, sulfate salts, iodide salts, and fluoride salts of various metals), organic metal salts (e.g., acetic salts), and hydrates thereof. For example, in order to dope graphene with Fe, iron chloride (III) is preferably used as the metal compound. An amount of the metal compound used is appropriately selected in accordance with a desirable dope amount of the metal atom[s] with which the graphene is doped. For example, in the case where the iron chloride (III) is used, the amount thereof is selected so that a percentage of the Fe atoms to the graphene preferably falls within a range of 5 mass% to 30 mass%, and more preferably falls within a range of 5 mass% to 20 mass%. Besides, an amount of the nitrogen-containing compound is also appropriately selected in accordance with a desirable dope amount of the nitrogen atom with which the graphene is doped. However, in a case where iron chloride (III) and pentaethylenehexamine are used, a molar ratio of the former to the latter preferably falls within a range of 1:1 to 1:2, and more preferably falls within a range of 1:1.5 to 1:1.8, for example.
Into thus-obtained the mixture, a solvent such as ethanol may be added as requested in order to adjust the total amount of the mixture, and further the resultant mixture is dispersed by ultrasonically dispersion. Subsequently, thus-obtained mixture is heated to be dry at an appropriate temperature (e.g., 60°C). Consequently, obtained is a mixture of the metal compound, the nitrogen-containing compound, and the graphene oxide.

The carbon-based material in which graphene is doped with metal atoms and a nitrogen atoms is obtained by: preparing the graphene by reducing graphene oxide in a condition that the graphene oxide is mixed with the metal compound and the nitrogen-containing compound; and doping thus-obtained graphene with the metal atom[s] and the nitrogen atom[s] derived from the metal compound and the nitrogen-containing compound, respectively. Reduction and doping with the metal atom[s] and the nitrogen atom[s] subsequent to the reduction are performed by appropriate methods. For example, the reduction of graphene oxide and doping of the graphene produced through the reduction with the metal atom[s] and the nitrogen atom[s] may be performed by heating the mixture of the graphene oxide, the metal compound, and the nitrogen-containing compound under reducing atmosphere or inert atmosphere. In this case, the thermal decomposition of the metal compound and the nitrogen-containing compound can proceed in parallel with the reduction of the graphene oxide. There is no need to conduct this heat treatment under excessive conditions for doping the graphene with the metal atom[s] and the nitrogen atom[s]. The heating conditions for the heat treatment are appropriately selected, but the heating temperature preferably falls within a range of 700°C to 1000°C, and more preferably falls within a range of 800°C to 950°C. In addition, the heating time preferably falls within a range of 30 sec to 120 sec. When the heating time is short, the carbon-based material is prepared efficiently, and the catalytic activity of the carbon-based material is further improved. The heating time more preferably falls within a range of 30 sec to 60 sec. Besides, regarding this heat treatment, a heating rate at the start of heating the mixture is preferably 50 °C/s or more. When the mixture is rapidly heated as described above, the catalytic activity of the carbon-based material is further improved.

In addition, thus-obtained carbon-based material may be further subjected to acid wash. For example, the carbon-based material is immersed into the 2 M sulfuric acid at 80°C for three hours for the acid wash. Regarding the performance of the carbon-based material subjected to such acid wash, a great change in overpotential is not observed, but a current gradient and a demarcation current each at the time of oxygen reduction are improved, compared with those of a carbon-based material without being subjected to acid wash.

By the method as described above, prepared is the carbon-based material with remarkably low inactive metal compound content and metal crystal content.

Since the carbon-based material has high catalytic activity and high electrical conductivity, the carbon-based material is particularly suitable for use as a catalyst (electrode catalyst) for electrochemically causing a chemical reaction to proceed at an electrode. Furthermore, the carbon-based material is suitable for use as a catalyst (oxygen reduction electrode catalyst) for making the oxygen reduction reaction proceed at the electrode. Moreover, the carbon-based material is particularly suitable for use as a catalyst applied to a gas diffusion electrode for reducing gaseous oxygen.

With regard to the case of applying the carbon-based material of the present embodiment to a catalyst of a gas diffusion electrode for a fuel cell, configuration examples of the gas diffusion electrode and the fuel cell will be described.

Examples of the fuel cell in the present description include: hydrogen fuel cells such as a polymer electrolyte fuel cell (PEFC) and a phosphoric acid fuel cell (PAFC); and microbial fuel cells (MFC).

The gas diffusion electrode includes: the carbon-based material as an electrode catalyst; and an electrically conductive carrier for carrying the carbon-based material. The gas diffusion electrode may further include a support as requested.

The carbon-based material shall be provided at least partially on a surface of the gas diffusion electrode so that oxidation reduction reactions involving reaction gas, electron donating microbes or the like can proceed on the gas diffusion electrode.

The electrically conductive carrier has electrical conductivity and is capable of carrying the carbon-based material which functions as the catalyst. A material of the electrically conductive carrier is not particularly limited so long as the electrically conductive carrier has these properties. Examples of the material of the electrically conductive carrier include a carbon-based substance, an electrically conductive polymer, a semiconductor, and metal.

The carbon-based substance is a substance containing carbon as a constituent. Examples of the carbon-based substance include graphite, activated carbon, carbon powder (e.g., carbon black, vulcan XC-72R, acetylene black, furnace black, denka black), carbon fibers (e.g., graphite felt, carbon wool, and carbon fabric), carbon plates, carbon paper, and carbon disks. In addition, the carbon-based substance may be a substance with a microstructure such as carbon nanotube, carbon nanohorn, and carbon nano clusters.

The electrically conductive polymer is a generic name of polymer compounds with electrical conductivity. The electrically conductive polymer may be a polymer composed of a single type or two or more types of monomers as a structure unit. Example of the monomer may include aniline, aminophenol, diaminophenol, pyrrol, thiophene, paraphenylene, fluorene, furan, acetylene, and the derivative thereof. Specific examples of the electrically conductive polymer include polyaniline, polyaminophenol, poly(diaminophenol), polypyrrol, polythiophene, polyparaphenylene, polyfluorene, polyfuran, and polyacetylene.

In view of availability, cost, corrosion resistance, and durability, the electrically conductive polymer is preferably the carbon-based substance, but may not be.

The carrier may be composed of a single type or a combinatation of two types or more of substances. For example, used may be a carrier composed of a combination of the carbon-based substance and the electrically conductive polymer, or a carrier composed of a combination of carbon powder and carbon paper which are the carbon-based substances.

A form of the carrier is not particularly limited so long as the carrier can carry the carbon-based material which functions as the catalyst on a surface of the carrier. In view of improving catalytic activity per unit mass (mass activity) of the gas diffusion electrode, the carrier is preferably in powder form or fiber form so that the carrier has a great specific surface area per unit mass. This is because a greater specific surface area of the catalyst can generally ensure a greater carrying area and improve dispersibility of catalytic components on a surface of the carrier, and therefore the catalyst with such a greater specific area can carry a greater amount of the catalytic components on its surface. Accordingly, the carrier is preferably in microparticle form like carbon powder or in microfiber form like carbon fibers. As the form of the carrier, particularly preferable is micropowder with an average particle size ranging from 1 nm to 1 µm. For example, carbon black with an average particle size ranging from 10 nm to 300 µm is preferable as the carrier.

The carrier has a part serving as a connection terminal to be connected to a conductive wire which interconnects a fuel cell electrode and an external circuit.

The support is defined as a material that is rigid and allows the gas diffusion electrode to have a fixed shape. In a case where the electrically conductive carrier is in powder form or the like, the electrically conductive carrier carrying the carbon-based material alone cannot allow the gas diffusion electrode to have a fixed shape. Alternatively, in a case where the electrically conductive carrier is in the form of a thin layer, the electrically conductive carrier does not have rigidity by itself. In these cases, the electrically conductive carrier which carries the carbon-based material is provided on a surface of the support so that the electrode has a fixed shape and rigidity.

The gas diffusion electrode may include the support as requested. For example, in a case where the electrically conductive carrier has a fixed shape and rigidity by itself like a carbon disk, the electrically conductive carrier carrying the carbon-based material can alone maintain the shape of the gas diffusion electrode. In other cases, an electrolyte member alone can allow the gas diffusion electrode to have a fixed shape and rigidity. In PEFC, for example, thin layer electrodes are individually provided on opposite faces of a solid polymer electrolyte membrane. In this case, the support is not necessarily required.

A material of the support is not particularly limited so long as it has such rigidity that the electrode can have a fixed shape. Moreover, the support may be an insulator or an electrical conductor. Examples of the support that is an insulator include: glass; plastic; synthetic rubber; ceramics; paper and plant chips (e.g., wood chips) subjected to water-repellent treatment or water-proof treatment; and animal chips (e.g., bone chips, shells, and sponges). The support preferably has a porous structure. This is because the support with a porous structure has an increased specific surface area to receive the electrically conductive carrier which carries the carbon-based material, and therefore allows an increase in mass activity of the electrode. Examples of the support with a porous structure include porous ceramics, porous plastics, and the animal chips. Examples of the support that is an electrical conductor include carbon-based substances (e.g., carbon paper, carbon fibers, and carbon rods), metal, and an electrically conductive polymer. In a case where the support is an electrical conductor, the electrically conductive carrier carrying the carbon-based material is provided on a surface of the support, and the support may also serve as a current collector.

When the gas diffusion electrode includes the support, the shape of the gas diffusion electrode is usually determined based on the shape of the support. The shape of the support is not particularly limited so long as the gas diffusion electrode functions as an electrode. The shape of the support may be selected appropriately in accordance with the shape or the like of the fuel cell. For example, the support may have a shape of a (approximate) plate (e.g., thin layer), a (approximate) prism, a (approximate) sphere, or a combination thereof.

A method of making the electrically conductive carrier carry the carbon-based material functioning as the catalyst may be a known method in the field. For example, available is a method of binding the carbon-based material on the surface of the electrically conductive carrier with an appropriate binder. The binder preferably has electrical conductivity but may not. For example, the binder may be an electrically conductive polymer solution which contains an appropriate solvent and an electrically conductive polymer dissolved therein, a dispersion of polytetrafluoroethylene (PTFE), or the like. The carbon-based material may be carried on the electrically conductive carrier by applying or spraying such a binder onto the surface of the electrically conductive carrier and/or a surface of the electrode catalyst for combining the carbon-based material with the electrically conductive carrier and thereafter drying the binder. Alternatively, the carbon-based material may be carried on the electrically conductive carrier by immersing the electrically conductive carrier into the binder solution including the carbon-based material, and thereafter drying the binder solution.

A method of preparing the gas diffusion electrode may be a known method in the field. For example, the gas diffusion electrode may be prepared by mixing the electrically conductive carrier which carries the carbon-based material functioning as the catalyst, with a dispersion of PTFE (e.g., Nafion (registered trademark; Du pont Kabushiki Kaisha) solution) or the like to prepare a mixture liquid, forming the mixture liquid into an appropriate shape, and heating it. With regard to PEFC and PAFC, the electrode is on a surface of the solid polymer electrolyte membrane or an electrolyte matrix layer. In this case, the electrode may be formed by: preparing an electrode sheet by forming the mixture liquid into a shape of a sheet; coating or impregnating a face, to be bonded to a membrane, of the electrode sheet with a solution of the fluorine resin-based ion exchange membrane having proton conductivity or the like; and bonding the fluorine resin-based ion exchange membrane to the electrode sheet by hot press, for example. The fluorine resin-based ion exchange membrane having proton conductivity may be Nafion, Filemion (registered trademark, available from ASAHI GLASS CO., LTD.), or the like.

Alternatively, the gas diffusion electrode may be prepared by applying a mixture slurry of the mixture liquid onto a surface of the support having electrical conductivity such as carbon paper, and thereafter heating them.

Alternatively, the gas diffusion electrode may be prepared by applying a mixture ink or a mixture slurry of the electrically conductive carrier carrying an electrode catalyst and a solution of a proton-conducting ion exchange membrane (e.g., Nafion solution) onto the surface of the support, the solid polymer electrolyte membrane, the electrolyte matrix layer, or the like.

The fuel cell including the gas diffusion electrode which includes the carbon-based material functioning as the catalyst will be described below. The fuel cell is suitable for use as the hydrogen fuel cell, MFC, or the like.

The hydrogen fuel cell extracts an electrical energy from hydrogen and oxygen by the reverse operation of water electrolysis, and known examples thereof include PEFC, PAFC, an alkaline fuel cell (AFC), a molten carbonate fuel cell (MCFC), and a solid oxide fuel cell (SOFC). The fuel cell of the present embodiment is preferably PEFC or PAFC. PEFC is a fuel cell including a proton conducting ion exchange membrane as an electrolyte member, and PAFC is a fuel cell including phosphoric acid (H₃PO₄) penetrating a matrix layer as an electrolyte member.

The fuel cell may have a known configuration of the fuel cells except for including the gas diffusion electrode that includes the electrode catalyst (oxygen reduction electrode catalyst) including the carbon-based material. For example, the fuel cell may have a configuration disclosed by a document "*Nenryoudenchi no gijutsu*", Institute of electrical engineers of japan and fuel cell power next generation system technology survey ad hoc committee, Ohmsha, H17, or Watanabe, K., J. Biosci. Bioeng., 2008,.106:528-536.

In the fuel cell, the gas diffusion electrode including the electrode catalyst which includes the carbon-based material may serve as any of an anode (fuel electrode) and a cathode (air electrode). In the hydrogen fuel cell, when the gas diffusion electrode including the electrode catalyst which includes the carbon-based material is used as the anode, the electrode catalyst in accordance with the present invention included in the electrode catalyses a reaction of H₂ → 2H⁺ + 2e⁻ involving hydrogen gas as fuel to donate electrons to the anode. When the gas diffusion electrode including the electrode catalyst which includes the carbon-based material is used as the cathode, the electrode catalyst catalyses a reaction of 1/2O₂ + 2H⁺ + 2e⁻ → 2H₂O involving oxygen gas functioning as oxidant. In contrast, in MFC, the anode accepts electrons directly from electron donating microbes, and therefore the gas diffusion electrode of the present embodiment is used as a cathode mainly causing the same electrode reaction as in the hydrogen fuel cell.

In addition, the gas diffusion electrode including the electrode catalyst including the carbon-based material of the present embodiment is expected to be applied to various applications in addition to the fuel cells as described above, and can be applied to the cathode of a carbon dioxide permeation device, a brine electrolysis device, or the like, for example.

An aqueous solution electrolysis device **1** of an embodiment including the gas diffusion electrode will be described below.

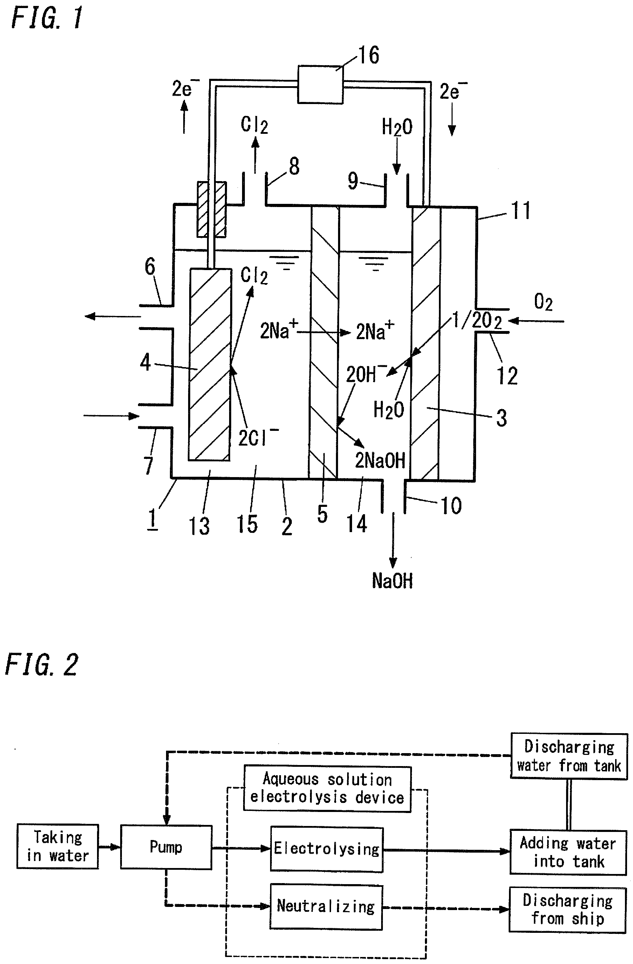

FIG. 1 shows an example of the aqueous solution electrolysis device **1** of the present embodiment. The aqueous solution electrolysis device **1** includes; a vessel **2**; a first electrode **3** and a second electrode **4** to electrolyse an electrolyte liquid **15** to be stored in the vessel **2**; a cation exchange membrane **5**; a gas feed and discharge chamber **11**; and a power source **16**.

The vessel **2** is partitioned into two chambers by the cation exchange membrane **5**. Hereinafter, one of the chambers is referred to as an anode chamber **13** and the other is referred to as a cathode chamber **14**.

The vessel **2** has an inlet **7** for an aqueous alkali halide solution, an outlet **6** for an aqueous halogen compound solution, an outlet **8** for halogen gas, a water inlet **9**, and an inlet **10** for an aqueous alkaline solution. The inlet **7**, the outlet **6**, and the outlet **8** communicate with the anode chamber **13**. The water inlet **9** and the outlet **10** communicate with the cathode chamber **14**. An aqueous alkali halide solution is supplied to the anode chamber **13** via the inlet **7** for an aqueous alkali halide solution while water is supplied to the cathode chamber **14** via the water inlet **9**. Consequently, the electrolyte liquid **15** is stored in the vessel **2**.

The cation exchange membrane **5** is not particularly limited, but preferably has resistance to chlorine to be produced in the anode chamber **13** and a great transport number of sodium ions. The cation exchange membrane **5** may have a general cation exchange group such as a sulfonic acid group, a phosphate group, a sulfonamide group, and a hydroxyl group. The cation exchange membrane **5** is preferably a fluorocarbon-based membrane with high chlorine resistance.

The gas feed and discharge chamber **11** is adjacent to the cathode chamber **14** of the vessel **2**. The gas feed and discharge chamber **11** has an inlet **12** for oxygen-containing gas, and the inlet **12** communicates with the gas feed and discharge chamber **11**.

The material for the second electrode **4** may be a metal material such as iron, cupper, and nickel, a carbon material, and the like. The shape of the second electrode **4** is not particularly limited. For example, the second electrode **4** formed of the metal material may have an expanded metal-like shape, a metal mesh-like shape, a perforated metal-like shape, or a coil-like shape. Alternatively, the second electrode **4** formed of the carbon material may have a sheet-like shape, a cloth-like, a paper-like shape, or a rod-like shape. The second electrode **4** is in the anode chamber **13**. When the electrolyte liquid **15** is stored in the vessel **2**, the second electrode **4** is immersed into the electrolyte liquid **15** in the anode chamber **13** and contacts with the electrolyte liquid **15**.

The first electrode **3** is a gas diffusion electrode of the present embodiment. The first electrode **3** is interposed between the cathode chamber **14** and the gas feed and discharge chamber **11**. The first electrode **3** has a side which faces the cathode chamber **14** and is in contact with a space inside the cathode chamber **14**, and also has a further side which faces the gas feed and discharge chamber **11** and is in contact with a space inside the gas feed and discharge chamber **11**. When the electrolyte liquid **15** is stored in the vessel **2**, the first electrode **3** contacts with the electrolyte liquid **15** inside the cathode chamber **14**. At the first electrode **3**, a three-phase interface between an electrode (solid phase), the electrolyte liquid **15** (liquid phase or solid phase), and gas containing oxygen (gas phase) is formed. Therefore, an electrode reaction of the gas and the electrolyte liquid **15** may occur.

The first electrode **3** of the gas diffusion electrode includes a gas diffusion layer and a catalyst layer. For example, the first electrode **3** is of a porous electrical conductor. The catalyst layer is defined by part of the porous electrical conductor in which a catalyst is present, and the gas diffusion layer is defined by part of the porous electrical conductor in which a catalyst is absent.

In order to increase a reactive area, it is preferable that the porous electrical conductor has a greater specific surface area. The specific surface area of the porous electrical conductor is preferably 1 m²/g or more, is more preferably 100 m²/g or more, and is much more preferably 500 m²/g or more. In this regard, the specific surface area is determined by the BET method. When the porous electrical conductor has the specific surface area of less than 1 m²/g determined by the BET method, an area of the three-phase interface is small, and therefore a reaction amount is likely to be small, unfortunately. Besides, it is preferable that the porous electrical conductor has smaller surface resistance in order to decrease a voltage loss due to the surface resistance. The surface resistance is preferably 1 kΩ/sq or less, and is more preferably 200 Ω/sq or less. Preferable examples of the porous electrical conductor include carbon sheet, carbon cloth, and carbon paper.

The catalyst layer is part of the porous electrical conductor that has an outside face (face to be in contact with the electrolyte liquid **15**) and is constituted by the catalyst fixed by a cation-conducting resin or the like. The catalyst layer is provided to reduce an overpotential of an oxidation reduction reaction at the first electrode **3**. The number of active sites of the catalyst increases with an increase in a specific surface area of the catalyst. Hence, the catalyst preferably has a greater specific surface area, and therefore preferably has a smaller particle size. Besides, in order to increase the reaction amount, it is preferable that a loaded amount of the catalyst is greater, and it is particularly preferable that the loaded amount is 0.05 mg/cm² or more.

In order to prevent flooding that an excessive amount of water present near the catalyst layer causes inhibition of diffusion of gas, the gas diffusion layer is preferably subjected to water-repellent treatment. The water-repellent treatment is performed by coating the gas diffusion layer with polytetrafluoroethylene (PTFE), for example. Owing to such water-repellent treatment, the first electrode **3** has such properties that the first electrode **3** allows gas to pass therethrough and does not allow water to pass therethrough, and the gas may diffuse to the catalyst layer of the first electrode **3**.

The catalyst included in the catalyst layer of the first electrode **3** used as the cathode includes the carbon-based material of the present embodiment. The carbon-based material has excellent electrical conductivity and high oxygen reduction catalytic activity, and therefore efficiency in electrolysis is improved.

The following description is made to a method of electrolysing alkali halide using the aqueous solution electrolysis device **1** as described above. In the following description, sodium chloride as a specific example of alkali halide is electrolyzed.

First, an aqueous solution containing sodium chloride is supplied to the anode chamber **13** of the vessel **2** via the inlet **7** for an aqueous alkali halide solution. The aqueous solution is, for example, a saturated saline solution, but may be seawater or the like. Besides, water is supplied to the cathode chamber **14** via the water inlet **9**. As result of these steps, the electrolyte liquid **15** is stored in the vessel **2**. In addition, gas containing oxygen is supplied to the gas feed and discharge chamber **11** via the inlet **12** for oxygen-containing gas.

In this condition, a voltage is applied between the first electrode **3** and the second electrode **4** so that the first electrode **3** serves as a cathode and the second electrode **4** serves as an anode. Accordingly, the following reduction reaction (oxygen reduction reaction) occurs at the first electrode **3**, and the following oxidation reaction occurs at the second electrode **4**.

(Reduction reaction) O₂ + 4H⁺ + 4e⁻ → 2H₂O

(Oxidation reaction) 2Cl⁻ → Cl₂ + 2e⁻

Consequenlty, chlorine gas is produced in the anode chamber **13**. Furthermore, parts of the chlorine gas produced in the anode chamber **13** is dissolved in the electrolyte liquid **15** in the anode chamber **13** to produce hypochlorous acid. The remaining chlorine gas is discharged outside the vessel **2** via the outlet **8** for halogen gas. An aqueous solution which contains hypochlorous acid is discharged outside the vessel **2** via the outlet **6** for an aqueous halogen compound solution.

Besides, these reactions cause unbalance of charges between the anode chamber **13** and the cathode chamber **14**, but this unbalance is compensated by migration of sodium ions in the anode chamber **13** to the cathode chamber **14** through the cation exchange membrane **5**. Accordingly, sodium hydroxide is produced in the cathode chamber **14**. An aqueous solution which contains the sodium hydroxide is discharged outside the vessel 2 via the inlet **10** for an aqueous alkaline solution.

Regarding such an electrolysis reaction, the abovementioned oxygen reduction reaction occurs remarkably efficiently at the first electrode **3**, namely, at the gas diffusion electrode including the carbon-based material. Therefore, a voltage to be applied between the first electrode **3** and the second electrode **4** can be decreased to about 2 V. That is, it is possible to greatly decrease an electrical energy consumption and to further improve efficiency in electrolysis markedly.

The aqueous solution electrolysis device **1** of the present embodiment can efficiently produce halogen gas (e.g., chlorine gas), an alkali compound (such as sodium hydroxide), and a halogen compound (e.g., hydrochloric acid and hypochlorous acid) by electrolysing alkali halide such as sodium chloride.

In addition, it is possible to kill microorganisms present in the solution containing sodium chloride using the aqueous solution electrolysis device **1** of the present embodiment. Such treatment is particularly suitable for the kill of microorganisms in sea water used as ballast water or the like. Usually, ballast water is taken into a ship with no cargo to stabilize the ship and is discharged at a remote marine area from a marine area in which the ballast water is taken into the ship. This may pose problems caused by microorganisms in the ballast water such as an ecosystem disturbance, fishery damage, and a health hazard. In this regard, the aqueous solution electrolysis device **1** can solve troubles caused by microorganisms in the ballast water by: producing a chlorine compound by electrolysing sodium chloride of the ballast water; and killing the microorganisms in the ballast water with the chlorine compound.

FIG. 2 shows an example of a flow diagram of treatment for ballast water using the aqueous solution electrolysis device **1**. This treatment for ballast water is performed by use of: the aqueous solution electrolysis device **1**; a pump to provide power for intake, circulation, and discharging of ballast water; and a ballast tank to store ballast water. According to the flow diagram of the treatment, first, ballast water is taken from the sea with the pump and then circulated in the ship in the following manner with the pump. At first, the ballast water is supplied to the anode chamber **13** of the aqueous solution electrolysis device **1** of the present embodiment and then electrolyzed to produce a chlorine compound in the ballast water. Then, this ballast water is supplied from the aqueous solution electrolysis device **1** to the ballast tank and then stored therein. Furthermore, the ballast water inside the ballast tank is discharged from the tank to be returned to the aqueous solution electrolysis device **1**, and then is further electrolyzed to produce a chlorine compound. Accordingly, it is possible to kill microorganisms in the ballast water using the chlorine compound such as hypochlorous acid. The ballast water is subjected to neutralization before discharged into the sea from the ship. The neutralization can be conducted by use of sodium hydroxide produced by the aqueous solution electrolysis device **1**. The abovementioned treatment of the ballast water enables highly efficient killing of microorganisms in the ballast water.

### Examples

### [Example 1]

In a reactor, 3 g of graphite (Wako 40mm), 138 mL of concentrated sulfuric acid, and 3.47 g of potassium nitrate were mixed to prepare a mixture liquid. Potassium permanganate was further added slowly thereto, with the reactor being in an ice bath. Subsequently, thus-obtained mixture liquid was stirred at 40°C for 30 min, and then 240 mL of ion-exchanged water was added thereto, followed by stirring and heating at 90°C for 1 hour. Thereafter, into the reactor, 600 mL of ion-exchanged water and 18 mL of 30% hydrogen peroxide solution were added to finish the reaction. Then, the resultant mixture liquid was washed with hydrochloric acid and water, followed by removing ions therefrom by dialysis. Furthermore, ultrasonic was applied to the resulting mixture liquid to make graphene oxide separated.

Thus-obtained graphene oxide was dried. Then, into 200 mg of the dried graphene oxide, an aqueous solution of 0.1 M iron chloride (III) and an ethanol solution of 0.15 M pentaethylene hexamine were added to prepare a mixture. An amount of the aqueous solution of 0.1 M iron chloride (III) was selected so that a percentage of Fe atoms to graphene was 10 mass%. Ethanol was further added to the mixture so that the resultant mixture has a total volume of 9 mL. The resultant mixture was subjected to ultrasonic dispersion, followed by drying with a dryer at 60°C.

Samples obtained in the abovementioned manner were placed in an end of a quartz tube, and an atmosphere in the quartz tube was replaced by argon. This quartz tube was inserted in an oven at 900°C, placed for 45 sec, and then withdrawn. The heating rate at the start of heating the sample was adjusted to 300°C/s by adjusting a time of insertion of the quartz tube into the oven to three seconds. Thereafter, the sample was cooled by allowing argon gas to pass through the quartz tube. Consequently, a carbon-based material was obtained.

### [Examples 2 and 3]

In Examples 2, the amount of an aqueous solution of 0.1 M iron chloride (III) was adjusted so that a percentage of Fe atoms to graphene was 17 mass%. In Examples 3, the amount of an aqueous solution of 0.1 M iron chloride (III) was adjusted so that a percentage of Fe atoms to graphene was 30 mass%. Except for these, the carbon-based materials according to Examples 2 and 3 were prepared in the same manner and under the same conditions as those of Example 1.

### [Comparative Example 1]

The carbon-based material according to Comparative Example 1 was prepared in the same manner and under the same conditions as those of Example 2 except for not using an aqueous solution of 0.1 M iron chloride (III).

### [Comparative Example 2]

The carbon-based material according to Comparative Example 1 was prepared in the same manner and under the same conditions as those of Example 2 except for not using an ethanol solution of 0.15 M pentaethylenehexamine.

### [Referential Example 1]

In Referential Example 1, the heating time was two hours in the step of heating the sample which contains graphene oxide, iron chloride (III), and pentaethylenehexamine. Except for this, the carbon-based material according to Referential Example 1 was prepared in the same manner and under the same conditions as those of Example 2.

### [Raman spectroscopy]

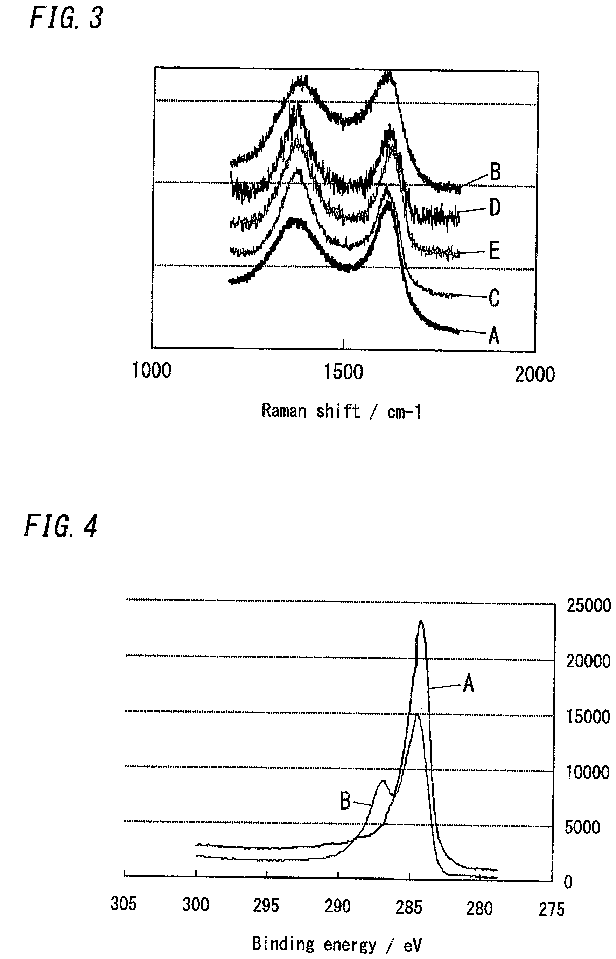

Graphite (Wako 40 mm), graphene oxide made of this graphite in the aforementioned manner, and the carbon-based materials obtained in Example 2, Comparative Examples 1 and 2 were analyzed by Raman spectroscopy. FIG. 3 shows thus-obtained Raman spectra. "A", "B", "C", "D", and "E" in FIG. 3 indicate the Raman spectra of the graphite, the graphene oxide, and the carbon-based materials obtained in Example 2 and Comparative Examples 1 and 2, respectively.

As shown in FIG.3, the results confirm that each of the Raman spectra has a G-band peak (the right peak) derived from C(sp²)-C(sp²) bond and a D-band peak (the left peak) derived from defects of the graphene.

A proportion (Id/Ig) is defined as a proportion of an intensity (Id) of the D-band peak to an intensity (Ig) of the G-band peak. The proportions (Id/Ig) regarding the graphite, the graphene oxide, and the carbon materials obtained in Example 2 and Comparative Examples 1 and 2 are 0.89, 0.96, 1.14, 1.15, and 1.02, respectively. Doping with a different element causes an increase in this intensity proportion (Id/Ig). The intensity proportions (Id/Ig) regarding the carbon-based materials obtained in Example 2 and Comparative Examples 1 and 2 are greater than that regarding graphite. Therefore, it is confirmed that the carbon-based materials are doped with a different element in these Examples and Comparative Examples.

### [X-ray photoelectron spectroscopy]

Graphene oxide and the carbon-based materials obtained in Example 2 and Comparative Examples 1 and 2 were analyzed by X-ray photoelectron spectroscopy (XPS). FIG. 4 to 7 show thus-obtained obtained XPS spectra.

FIG. 4 shows C1s peaks of the carbon-based material obtained in Example 2 and the graphene oxide. "A" and "B" in FIG. 4 indicate the XPS spectra of the carbon-based material obtained in Example 2 and the graphene oxide, respectively. The spectrum of the graphene oxide has a peak corresponding to the bond energy of 287 V, namely, a peak derived from a C-O bond. However, the spectrum of the carbon-based material obtained in Example 2 does not have such a peak. Therefore, it is confirmed that the carbon-based material according to Example 2 is obtained after being subjected to reduction.

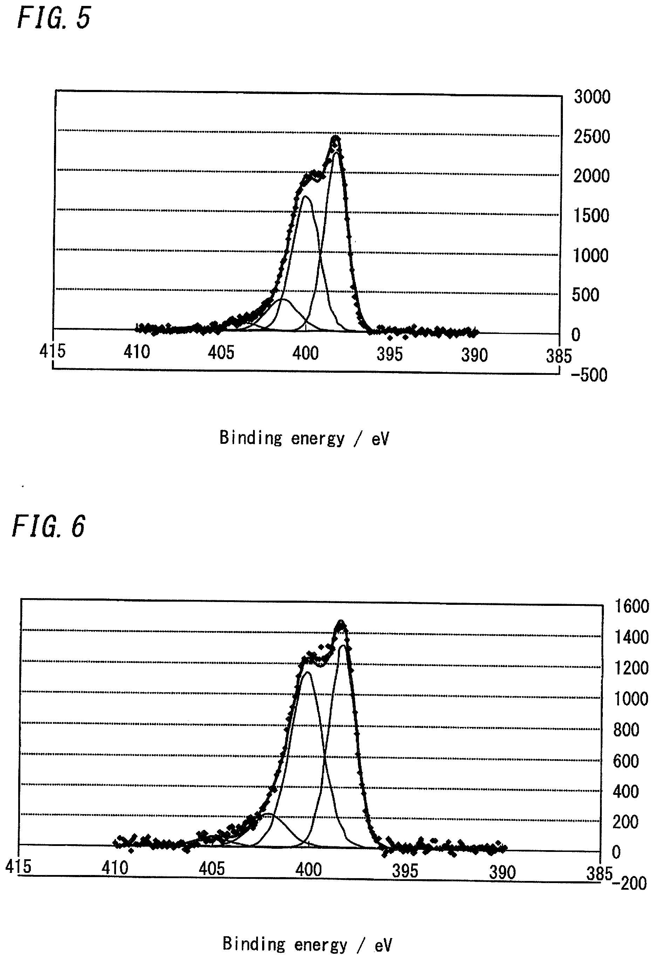

FIGs. 5 and 6 show N1s peaks of the carbon-based materials obtained in Comparative Example 1 and Example 2, respectively. Each of the spectra regarding Comparative Example 1 and Example 2 show N1s peaks. Therefore, it is confirmed that these carbon-based materials are doped with nitrogen atoms.

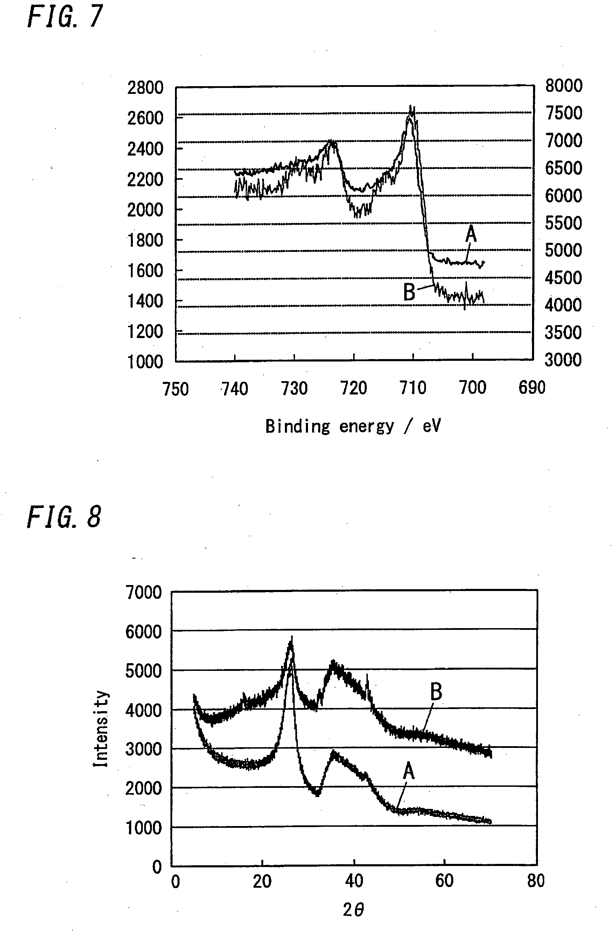

FIG. 7 shows Fe2p peaks of the carbon-based materials obtained in Comparative Example 2 and Example 2. "A" and "B" in FIG. 7 indicate the XPS spectra of the carbon-based materials obtained in Example 2 and Comparative Examples 2, respectively. Each of these spectra has Fe2p peaks. Therefore, it is confirmed that these carbon-based materials are doped with iron atoms.

The results of X-ray photoelectron spectroscopy and Raman spectroscopy confirm that the carbon-based material obtained in Example 2 has a fundamental structure of graphene and is doped with iron atoms and nitrogen atoms.

Besides, according to the results of X-ray photoelectron spectroscopy, the doping amounts of nitrogen atoms based on the amount of carbon atoms of the carbon-based materials of Examples 1 to 3 are 4.7 mass%, 6.9 mass%, and 12.3 mass%, respectively. In addition, the doping amounts of iron atoms based on the amount of carbon atoms of the carbon-based materials obtained in Examples 1 to 3 are 2.0 mass%, 3.9 mass%, and 5.3 mass%, respectively. In contrast, the doping amount of nitrogen atoms based on the amount of carbon atoms of the carbon-based material obtained in Comparative Example 1 is 4.1 mass%, and the doping amount of iron atoms based on the amount of carbon atoms in the carbon-based material obtained in Comparative Example 2 is 3.8 mass%.

### [X-ray diffraction measurement]

### (Measurement of carbon-based material)

The carbon-based material obtained in Example 2 was washed with acid, and thereafter X-ray diffraction measurement of the washed carbon-based material was conducted by use of CuKa radiation. FIG. 8 shows thus-obtained diffraction patterns. FIG. 8 also shows a result of X-ray diffraction measurement of a carbon-based material obtained in the same manner as Example 2 but not being subjected to acid wash (Referential Example 2). "A" and "B" in FIG. 8 indicate the diffraction patterns of the carbon-based materials obtained in Example 2 and Referential Examples 2, respectively.

As shown in FIG. 8, the diffraction pattern regarding Example 2 has a sharp (002) peak at 2θ of about 26.4°. Besides, this diffraction pattern does not show a specific peak which is derived from impurities and has such an intensity that a proportion of the intensity to an intensity of the (002) peak exceeds 0.1.

Accordingly, these results confirm that the carbon-based material obtained in Example 2 has a markedly low inactive metal compound content and a markedly low metal crystal content.

### (Comparison in structure)

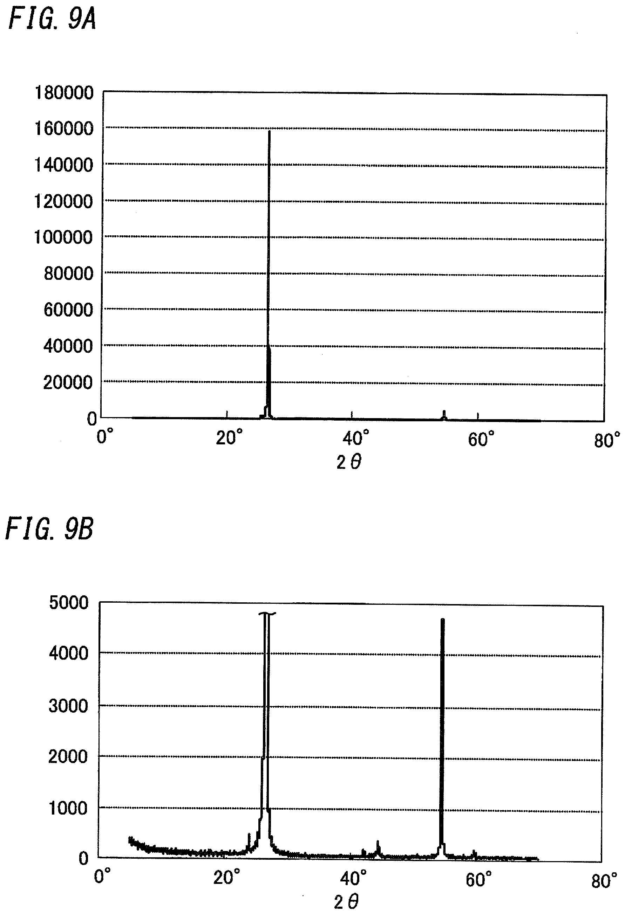

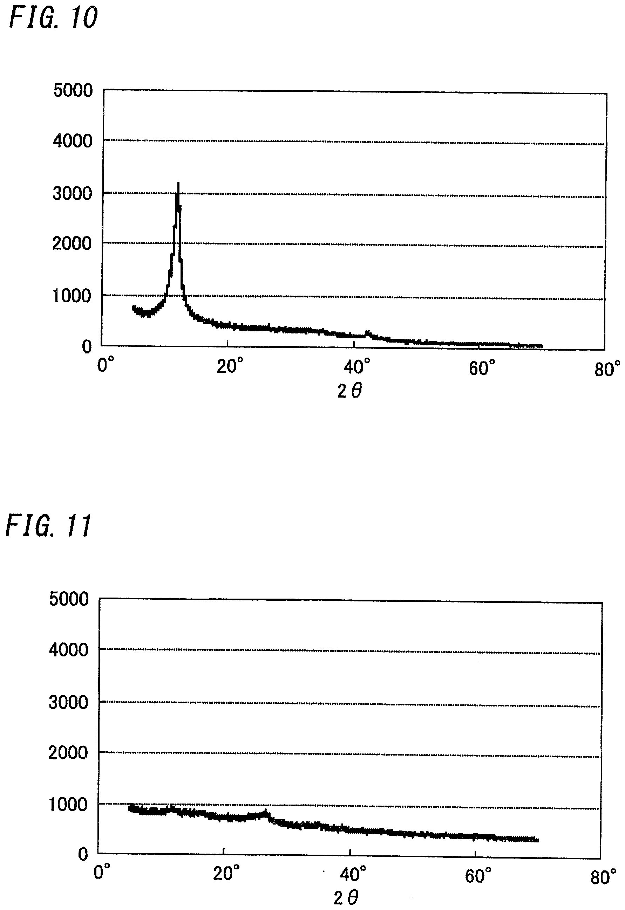

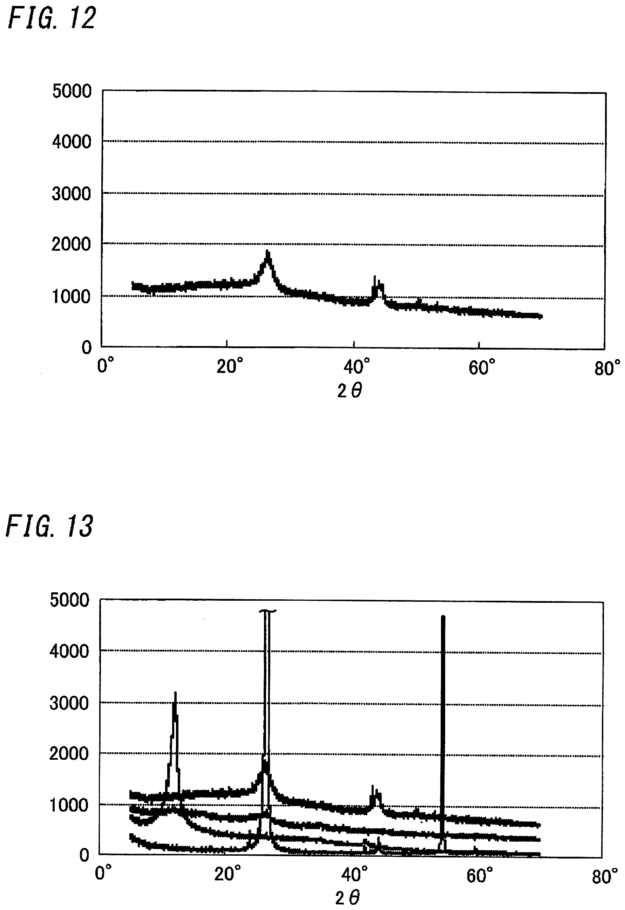

X-ray diffraction measurements using CuKa radiation were conducted under the same conditions regarding Graphite (Wako 40 mm), graphene oxide formed of this graphite in the aforementioned manner, and the carbon-based materials obtained in Example 2 and Referential Examples 1. Prior to the measurement, each material washed with acid. FIG. 9A to 12 show thus-obtained diffraction patterns. FIGs. 9A and 9B show the diffraction pattern of the graphite. FIGs. 10, 11, and 12 show diffraction patterns of the graphene oxide and the carbon-based materials obtained in Example 2 and Referential Example 1, respectively. FIG. 9A shows a whole shape of the diffraction pattern of graphite, and the diffraction pattern shown in FIG. 9B shows a pattern that the diffraction pattern shown in FIG. 9A is vertically extended. FIG. 13 shows the aforementioned four diffraction patterns which are superimposed.

These results reveal that the (002) peak in the diffraction pattern of the carbon-based material obtained in Example 2 is markedly smaller than the (002) peak in the diffraction pattern of the graphite, and an intensity ratio of the former to the latter is 0.00093. In this regard, to calculate the intensity ratio, a base line is created by the Shirley method in a range of 18° to 35° of 2θ, and an intensity of a peak is determined with reference to the base line.

Besides, the diffraction pattern of the graphene oxide has a peak at about 10° of 2θ, however, that of the carbon-based material obtained in Example 2 does not have such a peak. This confirms that the carbon-based material obtained in Example 2 is obtained after being subjected to sufficient reduction.

Moreover, the (002) peak in the diffraction pattern of the carbon-based material obtained in Referential Example 1 is greater than the (002) peak in the diffraction pattern of the carbon-based material obtained in Example 2. This may because, in Referential Example 1, the heating time in the step of heating was long, and therefore a distance between graphene sheets of the carbon-based material was short (namely, graphene sheets are stacked).

In addition, the diffraction pattern of the carbon-based material obtained in Referential Example 1 has a peak derived from impurities at about 43° of 2θ. This may suggest that growth of an inactive metal compound and growth of a metal crystal were promoted in Referential Example 1 because the heating time was long in the step of heating.

### [Appearance evaluation]

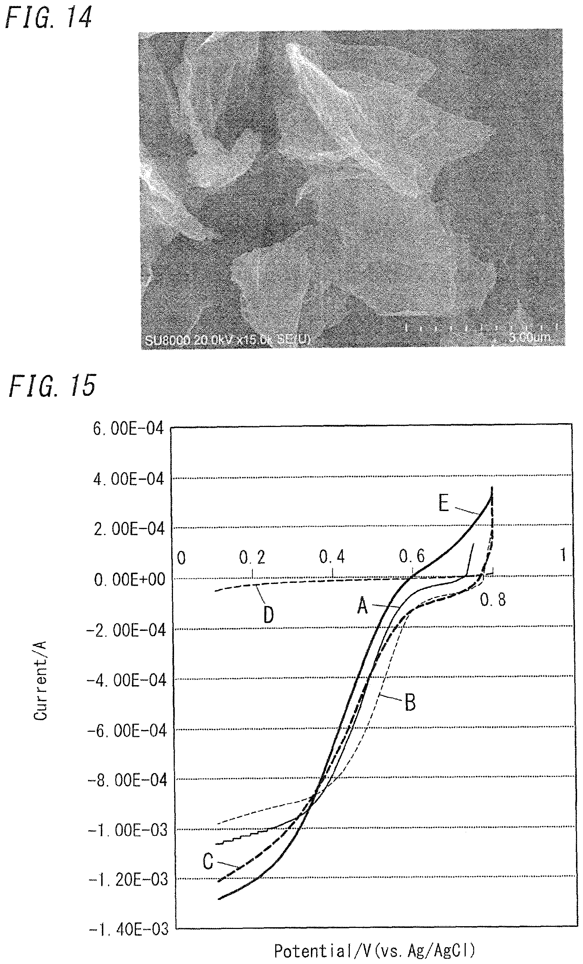

FIG. 14 is an electron micrograph of the carbon-based material obtained in Example 2. This confirms that the carbon-based material is in the form of a markedly thin sheet.

### [Oxygen reduction activity evaluation]

Oxygen reduction activities were evaluated in the following manner for the respective cases of using the carbon-based materials obtained in Examples 1 to 3 and Comparative Example 1 as catalysts.

First, 5 mg of a carbon-based material, 175 mL of ethanol, and 47.5 mL of 5% Nafion dispersion were mixed to prepare a mixture, and the mixture was subjected to ultrasonic dispersion.

Next, 7 mL of the resultant mixture was dropped onto a GC (glassy carbon) rotating disk electrode having an area of 0.196 cm² and then was dried. Accordingly, the carbon-based material was attached to the rating disk electrode at the attached amount of about 800 mg/cm². The rotating disk electrode voltammetry was conducted using this rotating disk electrode and an electrolyte of an aqueous solution of 0.5 M H₂SO₄ under conditions of a rotation speed of 1500 rpm and a sweep speed of 10 mV/s.

FIG. 15 shows thus-obtained voltammograms. Note that, "A" to "E" indicate the results regarding Examples 1 to 3, Comparative Example 1, and Referential Example 1, respectively. As shown in these results, according to Comparative Example 1, an oxygen reduction reaction was not observed. Whereas, according to each of Examples, an oxygen reduction reaction proceeds when an electrode potential exceeds about 0.7 V (vs. Ag/AgCl). Regarding overpotentials, the overpotential of each Example is at most about 150 mV higher than the overpotential of the case of using a platinum catalyst. These catalytic activities of Examples 1 to 3 reach the highest level in view of non-platinum based oxygen reduction catalysts.
Referential Example 1 provides the overpotential about 70 mV higher than Example 2 provides. This may because, in Referential Example 1, burning time was longer, therefore metal atoms to function as an active center were dropped off from the graphene sheet and impurities such as metal crystal and carbonated iron was unfortunately generated between the graphene sheets. Hence, Referential Example 1 provides lower catalytic activity.

### Industrial Applicability

The carbon-based material in accordance with the present invention is suitable for use as a catalyst, particularly a catalyst for an electrode catalyst used to reduce oxygen at an electrode.

The electrode catalyst and the oxygen reduction electrode catalyst in accordance with the present invention are suitable for use as a gas diffusion catalyst, but the applications thereof are not limited.

The gas diffusion electrode in accordance with the present invention is suitable for use as an electrode of a fuel cell, a carbon dioxide permeation device, an aqueous electrolysis device, a brine electrolysis device, or the like, but the application thereof is not limited.

## Claims

1. A carbon-based material comprising
graphene doped with metal atoms and at least one type of non-metal atoms selected from a group consisting of nitrogen atoms, boron atoms, sulfur atoms, and phosphorus atoms,
**characterized in that** a diffraction pattern obtained by X-ray diffraction measurement of the carbon-based material by use of CuKα radiation shows that a proportion of the highest of intensities of peaks derived from an inactive metal compound and a metal crystal to an intensity of a (002) peak at around 26° of 2θ is 0.1 or less,
wherein the inactive metal compound is a compound composed of a metal atom which is not doped in graphene in the carbon-based material, and wherein the graphene is composed of a graphene sheet or formed of a material including two or more graphene sheets.

2. The carbon-based material according to claim 1, wherein
a proportion of the intensity of the (002) peak of the diffraction pattern obtained by X-ray diffraction measurement of the carbon-based material by use of CuKα radiation to an intensity of a (002) peak of a diffraction pattern obtained by X-ray diffraction measurement of graphite by use of CuKα radiation is 0.002 or less.

3. The carbon-based material according to claim 1 or 2, wherein
a percentage of the metal atoms to carbon atoms of the carbon-based material determined by XPS is 0.5 mass% or more but 10 mass% or less.

4. The carbon-based material according to any one of claims 1 to 3, wherein
a percentage of the non-metal atoms to carbon atoms of the carbon-based material determined by XPS is 1 mass% or more.

5. The carbon-based material according to any one of claims 1 to 4, wherein the metal atoms include an iron atom.

6. An electrode catalyst comprising the carbon-based material according to any one of claims 1 to 5.

7. An oxygen reduction electrode catalyst comprising the carbon-based material according to any one of claims 1 to 5.

8. A gas diffusion electrode comprising the electrode catalyst according to claim 6 or the oxygen reduction electrode catalyst according to claim 7.

9. An aqueous solution electrolysis device comprising:
a vessel to receive an aqueous alkali halide solution;
a first electrode and a second electrode to electrolyse electrolyte liquid to be stored in the vessel;
a power source to apply a voltage between the first electrode and the second electrode so that the first electrode functions as a cathode and the second electrode functions as an anode; and
a cation exchange membrane between the first electrode and the second electrode in the vessel,
the first electrode being the gas diffusion electrode according to claim 8.

10. A method of preparing a carbon-based material according to any one of claims 1 to 5, comprising steps of:
preparing a mixture of graphene oxide, a metal compound, and a non-metal containing compound which contains at least one type of non-metal selected from a group consisting of nitrogen, boron, sulfur, and phosphorus;
reducing the graphene oxide of the mixture to graphene; and
doping the graphene with a metal atom derived from the metal compound and a non-metal atom derived from the non-metal containing compound,
the non-metal containing compound having a molecular weight of 800 or less,
wherein the steps of reducing the graphene oxide and doping the graphene with the metal atom and the non-metal atom are conducted by heating the mixture, wherein the mixture is heated at a heating temperature of 700°C or more but 1000°C or less for a heating time of 10 seconds or more but less than 10 minutes.

11. The method of preparing a carbon-based material according to claim 10,
wherein
the non-metal containing compound includes at least one selected from a group consisting of pentaethylenehexamine, tetraethylenepentamine, triethylenetetramine, and ethylenediamine.

## Patentansprüche

1. Material auf Kohlenstoffbasis, umfassend
Graphen, dotiert mit Metallatomen und mindestens einer Art von Nichtmetallatomen, ausgewählt aus einer Gruppe, bestehend aus Stickstoffatomen, Boratomen, Schwefelatomen und Phosphoratomen,
**dadurch gekennzeichnet, dass** ein Beugungsmuster, erhalten durch Röntgenbeugungsmessung des Materials auf Kohlenstoffbasis unter Verwendung von CuKα-Strahlung, zeigt, dass ein Anteil der höchsten von Maximumintensitäten, stammend aus einer inaktiven Metallverbindung und einem Metallkristall, in Bezug auf eine Intensität eines (002)-Maximums bei etwa 26° von 2θ 0,1 oder weniger beträgt,
wobei die inaktive Metallverbindung eine Verbindung, bestehend aus einem Metallatom, welches nicht in Graphen dotiert in dem Material auf Kohlenstoffbasis vorliegt, ist und
wobei das Graphen aus einer Graphenschicht besteht oder aus einem Material, welches zwei oder mehr Graphenschichten einschließt, gebildet ist.

2. Material auf Kohlenstoffbasis nach Anspruch 1, wobei
ein Anteil der Intensität des (002)-Maximums des Beugungsmusters, erhalten durch Röntgenbeugungsmessung des Materials auf Kohlenstoffbasis unter Verwendung von CuKα-Strahlung, in Bezug auf eine Intensität eines (002)-Maximums eines Beugungsmusters, erhalten durch Röntgenbeugungsmessung von Graphit unter Verwendung von CuKα-Strahlung, 0,002 oder weniger beträgt.

3. Material auf Kohlenstoffbasis nach Anspruch 1 oder 2, wobei ein prozentualer Anteil der Metallatome in Bezug auf Kohlenstoffatome des Materials auf Kohlenstoffbasis, bestimmt durch XPS, 0,5 Massen-% oder mehr, jedoch 10 Massen-% oder weniger beträgt.

4. Material auf Kohlenstoffbasis nach einem der Ansprüche 1 bis 3, wobei ein prozentualer Anteil der Nichtmetallatome in Bezug auf Kohlenstoffatome des Materials auf Kohlenstoffbasis, bestimmt durch XPS, 1 Massen-% oder mehr beträgt.

5. Material auf Kohlenstoffbasis nach einem der Ansprüche 1 bis 4, wobei die Metallatome ein Eisenatom einschließen.

6. Elektrodenkatalysator, umfassend das Material auf Kohlenstoffbasis nach einem der Ansprüche 1 bis 5.

7. Sauerstoffreduktionselektrodenkatalysator, umfassend das Material auf Kohlenstoffbasis nach einem der Ansprüche 1 bis 5.

8. Gasdiffusionselektrode, umfassend den Elektrodenkatalysator nach Anspruch 6 oder den Sauerstoffreduktionselektrodenkatalysator nach Anspruch 7.

9. Elektrolysevorrichtung mit einer wässrigen Lösung, umfassend:
einen Behälter, um eine wässrige Alkalihalogenidlösung aufzunehmen;
eine erste Elektrode und eine zweite Elektrode, um eine in dem Behälter aufzubewahrende Elektrolytflüssigkeit zu elektrolysieren;
eine Stromquelle, um eine Spannung zwischen der ersten Elektrode und der zweiten Elektrode anzulegen, so dass die erste Elektrode als eine Kathode dient und die zweite Elektrode als eine Anode dient; und
eine Kationenaustauschermembran zwischen der ersten Elektrode und der zweiten Elektrode in dem Behälter,
wobei die erste Elektrode die Gasdiffusionselektrode nach Anspruch 8 ist.

10. Verfahren zur Herstellung eines Materials auf Kohlenstoffbasis nach einem der Ansprüche 1 bis 5, umfassend die Schritte:
Herstellen eines Gemisches aus Graphenoxid, einer Metallverbindung und einer Nichtmetall enthaltenden Verbindung, welche mindestens eine Art von Nichtmetall, ausgewählt aus einer Gruppe, bestehend aus Stickstoff, Bor, Schwefel und Phosphor, enthält;
Reduzieren des Graphenoxids aus dem Gemisch zu Graphen; und
Dotieren des Graphens mit einem Metallatom, stammend aus der Metallverbindung, und einem Nichtmetallatom, stammend aus der Nichtmetall enthaltenden Verbindung,
wobei die Nichtmetall enthaltende Verbindung ein Molekulargewicht von 800 oder weniger aufweist,
wobei die Schritte des Reduzierens des Graphenoxids und des Dotierens des Graphens mit dem Metallatom und dem Nichtmetallatom durch Erwärmen des Gemisches durchgeführt werden, wobei das Gemisch bei einer Erwärmungstemperatur von 700°C oder mehr, jedoch 1000°C oder weniger für eine Erwärmungszeit von 10 Sekunden oder mehr, jedoch weniger als 10 Minuten erwärmt wird.

11. Verfahren zur Herstellung eines Materials auf Kohlenstoffbasis nach Anspruch 10, wobei
die Nichtmetall enthaltende Verbindung mindestens eines, ausgewählt aus einer Gruppe, bestehend aus Pentaethylenhexamin, Tetraethylenpentamin, Triethylentetramin und Ethylendiamin, einschließt.

## Revendications

1. Matière à base de carbone comprenant:
du graphène dopé avec des atomes de métal et au moins un type d'atomes de non-métal sélectionnés parmi le groupe consistant en atomes d'azote, atomes de bore, atomes de soufre et atomes de phosphore,
**caractérisée en ce qu'**une image de diffraction obtenue par diffractomètre de rayons X de la matière à base de carbone en utilisant un rayonnement CuKα montre qu'une partie des intensités les plus élevées de pics dérivés d'un composé de métal inactif et d'un cristal de métal à une intensité d'un pic de (002) à environ 26° de 2θ est de 0,1 ou moins,
dans laquelle le composé de métal inactif est un composé composé d'un atome de métal non dopé au graphène dans la matière à base de carbone, et
dans laquelle le graphène est composé d'une feuille de graphène ou est formé d'une matière comprenant deux feuilles de graphène ou plus.

2. Matière à base de carbone selon la revendication 1, dans laquelle une partie de l'intensité du pic de (002) de l'image de diffraction obtenue par diffractomètre de rayons X de la matière à base de carbone en utilisant un rayonnement CuKα à une intensité d'un pic de (002) d'une image de diffraction obtenue par diffractomètre de rayons X de graphite par utilisation d'un rayonnement de CuKα est de 0,002 ou moins.

3. Matière à base de carbone selon la revendication 1 ou 2, dans laquelle le pourcentage d'atomes de métal par rapport aux atomes de carbone de la matière à base de carbone déterminé par XPS est de 0,5% en masse ou plus, mais de 10% en masse ou moins.

4. Matière à base de carbone selon l'une quelconque des revendications 1 à 3, dans laquelle le pourcentage d'atomes de non-métal par rapport aux atomes de carbone de la matière à base de carbone déterminé par XPS est de 1% en masse ou plus.

5. Matière à base de carbone selon l'une quelconque des revendications 1 à 4, dans laquelle les atomes de métal comprennent un atome de fer.

6. Catalyseur d'électrode comprenant la matière à base de carbone selon l'une quelconque des revendications 1 à 5.

7. Catalyseur d'électrode de réduction d'oxygène comprenant la matière à base de carbone selon l'une quelconque des revendications 1 à 5.

8. Électrode de diffusion de gaz comprenant le catalyseur d'électrode selon la revendication 6 ou le catalyseur d'électrode de réduction d'oxygène selon la revendication 7.

9. Appareil d'électrolyse d'une solution aqueuse comprenant:
un récipient destiné à recevoir une solution d'halogénure alcalin aqueuse;
une première électrode et une deuxième électrode pour électrolyser le liquide d'électrolyte à entreposer dans le récipient;
une source d'énergie pour appliquer une tension entre la première électrode et la deuxième électrode de sorte que la première électrode fonctionne comme une cathode et la deuxième électrode fonctionne comme une anode; et
une membrane échangeuse de cations entre la première électrode et la deuxième électrode dans le récipient,
la première électrode étant l'électrode de diffusion de gaz selon la revendication 8.

10. Procédé de préparation d'une matière à base de carbone selon l'une quelconque des revendications 1 à 5, comprenant les étapes de:
préparation d'un mélange d'oxyde de graphène, d'un composé de métal et d'un composé ne contenant pas un métal qui contient au moins un type de non-métal sélectionné parmi le groupe consistant en azote, bore, soufre et phosphore;
réduction de l'oxyde de graphène du mélange en graphène; et
dopage du graphène avec un atome de métal dérivé du composé de métal et d'un atome de non-métal dérivé du composé ne contenant pas un métal,
le composé ne contenant pas un métal ayant un poids moléculaire de 800 ou moins, dans lequel les étapes de réduction de l'oxyde de graphène et de dopage du graphène avec l'atome de métal et l'atome de non-métal sont conduites par chauffage du mélange, dans lequel le mélange est chauffé à une température de chauffe de 700°C ou plus, mais de 1000°C ou moins pendant une durée de chauffe de 10 secondes ou plus, mais de moins de 10 minutes.

11. Procédé de préparation d'une matière à base de carbone selon la revendication 10, dans lequel
le composé ne contenant pas un métal comprend au moins l'un sélectionné parmi le groupe consistant en pentaéthylènehexamine, tétraéthylènepentamine, triéthylènetétramine et éthylènediamine.
